# EUROPÄISCHE PATENTANMELDUNG

(11) **EP 1 911 414 A2**
(43) Veröffentlichungstag der Anmeldung: **16.04.2008**
(21) Anmeldenummer: 07025119.4
(22) Anmeldetag: 02.05.2002
(51) Int. Cl.: A61C 15/00, A61C 5/02

(54) **Reinigungsinstrument für einen Zahnwurzelkanal**

(30) Priorität: 16.05.2001 DE 10123814
(62) Teilanmeldung aus: 02009333.2
(71) Anmelder: Coltène/Whaledent GmbH + Co. KG, 89129 Langenau (DE)
(72) Erfinder: Die Erfindernennung liegt noch nicht vor
(74) Vertreter: Forstmeyer, Dietmar

(57) **Zusammenfassung**

Das Reinigungsinstrument (10) umfasst einen Kopfabschnitt (12) und einen sich daran anschließenden Reinigungsabschnitt (14) mit einem Schaft (20), der an seiner Mantelfläche mit Borsten (22) versehen ist. Damit insbesondere der Zahnwurzelkanal oder auch ein Zahnzwischenraum mit dem Reinigungsinstrument (10) zuverlässig gereinigt werden kann, ist der Schaft (20) zusammen mit den Borsten (22) einstückig ausgebildet.

## Beschreibung

### Hintergrund der Erfindung

Die Erfindung betrifft ein Reinigungsinstrument für einen Zahnwurzelkanal und auch einen Zahnzwischenraum mit einem Kopfabschnitt und einem sich daran anschließenden Reinigungsabschnitt, der einen Schaft aufweist, der an seiner Mantelfläche mit Borsten versehen ist. Ferner betrifft die Erfindung ein Verfahren zum Herstellen eines Reinigungsinstrumentes für einen Zahnwurzelkanal, das einen Kopfabschnitt und einen daran anschließenden Reinigungsabschnitt mit einem Schaft aufweist, dessen Mantelfläche mit Borsten versehen ist.

Reinigungsinstrumente dieser Art werden bei zahnmedizinischen Behandlungen eingesetzt, nachdem der Wurzelkanal eines Zahnes mit einem entsprechenden Räum- oder Bohrinstrument aufbereitet worden ist.

Ziel der Reinigung ist es, das Material, das beim Ausräumen im Zahnwurzelkanal zurückgeblieben ist, aus dem Zahn herauszufördern, um nachfolgend den Zahnwurzelkanal füllen zu können.

Bei herkömmlichen Reinigungsverfahren wird eine Spüllösung in den Zahnwurzelkanal eingebracht, die das verbleibende Material mitreißen und herausfördern soll. Dabei ist jedoch nicht gewährleistet, dass auch Material aus dem Wurzelkanal gespült wird, dass sich am Ende des Wurzelkanals bzw. im apikalen Viertel gesammelt hat.

Alternativ oder zusätzlich können Zahnwurzelkanäle mit rotierenden, sogenannten "bohrenden" Instrumenten gereinigt werden. Jedoch ist nicht jeder Zahnwurzelkanal im Querschnitt kreisrund gestaltet, so daß mit derartigen Instrumenten sich nicht alle Bereiche des Zahnwurzelkanals reinigen lassen.

Es sind Bürsten zum Reinigen von Aushöhlungen und Bohrungen in Zähnen bekannt, bei denen Borsten in gewundene Drähte eingearbeitet sind. Diese Bürsten sind jedoch in der Regel zu groß, um damit einen Zahnwurzelkanal zu reinigen. Darüber hinaus können sich während der Rotation der Bürste die gewundenen Drähte aufdrillen und Borsten können sich lösen und im Wurzelkanal zurückbleiben.

### Zugrundeliegende Aufgabe

Der Erfindung liegt die Aufgabe zugrunde, ein Reinigungsinstrument und ein Verfahren bereitzustellen, mit dem die oben genannten Nachteile überwunden sind und sich insbesondere der Zahnwurzelkanal zuverlässig reinigen lässt.

### Erfindungsgemäße Lösung

Diese Aufgabe ist erfindungsgemäß mit einem Reinigungsinstrument der eingangs genannten Art gelöst, bei dem der Schaft zusammen mit den Borsten einstückig ausgebildet ist. Ferner ist die Aufgabe mit einem eingangs genannten Verfahren gelöst, bei dem das Herstellen des Schaftes zusammen mit den Borsten aus einem Stück erfolgt.

Der Reinigungsabschnitt eines eingangs beschriebenen Reinigungsmittels muss derart gestaltet sein, dass der Schaft die Borsten sicher hält und zugleich die Rotationsbewegung vom Kopfabschnitt des Reinigungsinstruments bis an die Spitze des Reinigungsabschnitts übertragen wird. Der Schaft darf sich beim Reinigen also nicht erheblich verwinden, er wird daher verhältnismäßig steif gestaltet.

Die Borsten hingegen dürfen die Wand des Wurzelkanals nicht schädigen. Sie müssen sich an die Wand anlegen und sich ihr anpassen. Borsten werden daher aus einem verhältnismäßig weichen Material oder sind sehr fein mit einem kleinen Durchmesser gestaltet.

Bei der Erfindung sind trotz dieser Überlegungen der Schaft und die Borsten einstückig gestaltet, was bedeutet, dass sie als einzelnes Werkstück gestaltet sind, also in der Regel auch aus einem Material. Dies hat den Vorteil, dass die Borsten erheblich besser an den Schaft angebunden sind. Sie lösen sich daher nicht beim Reinigen.

Darüber hinaus kann den Borsten nahezu jede gewünschte Gestalt gegeben werden, sie müssen nicht in verwundene Drähte eingebracht werden. Die Herstellung wird einfacher und kostengünstiger. Ferner können die Borsten besonders klein, als sogenannte Mikroborsten gestaltet sein, was bei herkömmlichen Herstellverfahren für Reinigungsbürsten von Zahnöffnungen nicht möglich ist, da sich sehr kleine Borsten sofort aus dem Verband der verwundenen Drähte lösen.

Die Borsten insgesamt können nahezu jede gewünschte Bürstengestalt ausbilden. So kann beispielsweise eine solche Reinigungsbürste auch im Querschnitt oval gestaltet sein.

Um eine ausreichende Steifigkeit des Schaftes zu erreichen, kann dieser verhältnismäßig dick gestaltet sein, weil sich erfindungsgemäß die Borsten besonders kurz gestalten lassen.

Insgesamt kann der Reinigungsabschnitt der erfindungsgemäßen Reinigungsinstrumente im Durchmesser kleiner als herkömmliche Bürsten gestaltet werden. Die Reinigungsinstrumente eignen sich daher hervorragend zum Reinigen von Wurzelkanälen. Sie führen im Vergleich zu herkömmlichen Spülverfahren zu einem erheblich besseren Reinigungsergebnis.

### Vorteilhafte Weiterbildungen der Erfindung

Bei einer vorteilhaften Weiterbildung des erfindungsgemäßen Reinigungsinstruments ist der Schaft zusammen mit den Borsten durch ein Fräsverfahren, insbesondere ein Mikrofräsverfahren, hergestellt. Da Fräsen ein abtragendes Verfahren ist, können mit diesem Verfahren die Borsten scharfkantig gestaltet werden, so dass sie besonders gut reinigen. Darüber hinaus können die Borsten in jeder gewünschten Gestalt ausgebildet werden. Fräsen bietet sich an, wenn verhältnismäßig starres oder steifes Grundmaterial verwendet wird.

Alternativ oder zusätzlich können Schaft und Borsten durch ein Gießverfahren, insbesondere ein Mikrospritzgießverfahren, hergestellt werden. Ein derartiges Verfahren ist besonders kostengünstig. Es ist besonders dann sinnvoll, wenn verhältnismäßig weiches Grundmaterial zum Einsatz kommt, da dieses beim Gießvorgang besonders gut die gesamte Gießform, d.h. insbesondere die Borstenhöhlen der Form ausfüllt.

Um die Verwindungs- und Biegesteifigkeit des Schaftes des erfindungsgemäßen Reinigungsinstrumentes zu erhöhen, kann dieser vorteilhaft mit einer Seele aus einem versteifenden Material, insbesondere aus Metall, versehen sein. Der Reinigungsabschnitt des erfindungsgemäßen Instruments wird in der Regel aus Kunststoff gestaltet. In diesen kann entweder in einem vorgelagerten Arbeitsgang oder während des eigentlichen Mikrogießverfahrens ein Stab aus Metall, beispielsweise aus Titan oder Edelstahl, aus Fiberglas oder aus Kohlenstoff eingegossen werden. Als Kunststoffe eignen sich insbesondere Polypropylen, Polystyrol oder Elastomere. Solche Kunststoffe sind insbesondere daher geeignet, weil sich die Borsten einerseits nicht vom Schaft lösen, also nicht abreißen, und andererseits ausreichend weich sind, dass sie sich der Kontur und Oberfläche des Wurzelkanals anpassen. Die im Schaft angeordnete Seele erleichtert auch das Anbringen eines Kopfabschnittes, der entweder einen Handgriff aufweisen kann, oder zum Einsetzen in eine Bohreinrichtung vorgesehen ist.

Um eine optimale Reinigungswirkung und zugleich eine hohe Stabilität des Reinigungsabschnitts zu erzielen, bilden die Borsten insgesamt eine im wesentlichen kegelförmige Außenform. Bei dieser Form ist die Kraftleitung vom Kopfabschnitt des Reinigungsinstruments zur Spitze des Reinigungsabschnitts gewährleistet, ohne dass sich der Schaft erheblich verwindet. Zugleich müssen sich die Borsten verhältnismäßig wenig dem in der Regel zumindest gestuft verjüngenden ausgeräumten Wurzelkanal anpassen. Die kegelförmige Außenform weist vorteilhaft am Kopfabschnitt einen Durchmesser von 0,4 mm bis 2,0 mm auf und an der Spitze einen Durchmesser von 0,1 mm bis 1,0 mm. Die Borsten sind vorteilhaft als runde Borsten mit einem Durchmesser von 0,01 mm gestaltet.

Das erfindungsgemäße Reinigungsinstrument trägt besonders gut Material aus dem Wurzelkanal heraus, wenn die Borsten über die Mantelfläche des Schaftes schraubenförmig verteilt angeordnet sind. Das Reinigungsinstrument fördert dann Material wie ein Bohrer ohne aber den Wurzelkanal zu vergrößern. Durch entsprechende Auswahl von Härte, Form und Stellung der Borsten kann die Reinigungswirkung gezielt an bestehende Anforderungen angepasst werden. Dabei können über den Schaft verteilt verschiedene Reinigungszonen mit verschieden gestalteten Borsten oder mit Borsten aus verschiedenem Material angeordnet sein.

Um das Reinigungsergebnis weiter zu verbessern sind die Borsten bei vorteilhaften Weiterbildungen des erfindungsgemäßen Reinigungsinstruments beschichtet. Sie sind insbesondere mit einem abräsiven Material oder einem chemisch wirkenden Mittel wie z.B. einem Gleitmittel oder einem Desinfektionsmittel versehen.

Damit mit dem erfindungsgemäßen Reinigungsinstrument auch Material am Ende des Wurzelkanals, d.h. im apikalen Viertel, entfernt werden kann, sind die Borsten vorteilhaft zumindest teilweise zur Längsachse des Schaftes geneigt angeordnet, insbesondere stehen an der Spitze des Schaftes Borsten im wesentlichen in Richtung der Längsachse des Schaftes von diesem ab.

### Kurzbeschreibung der Zeichnung

Nachfolgend wird ein Ausführungsbeispiel eines erfindungsgemäßen Reinigungsinstrumentes anhand der beigefügten schematischen Zeichnung näher erläutert. Es zeigt:

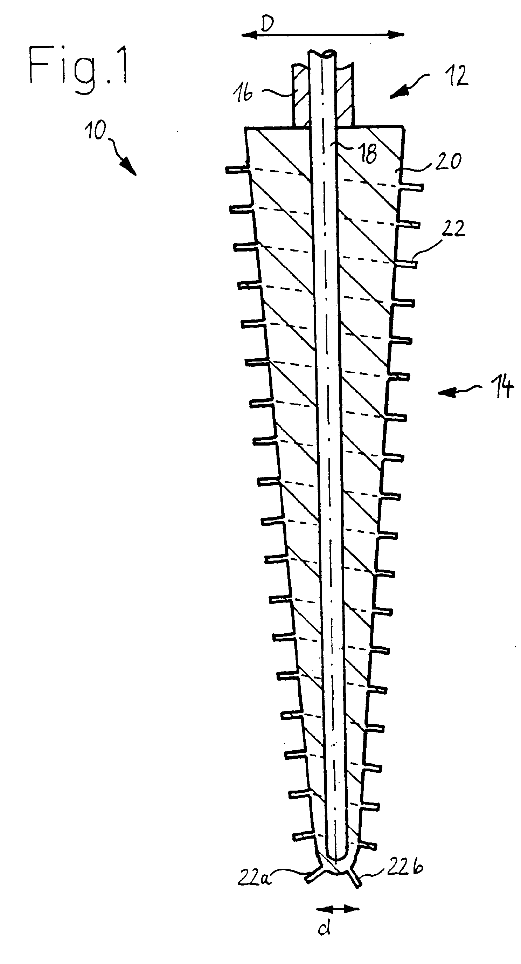

- Fig.1: einen Längsschnitt eines Ausführungsbeispiels eines erfindungsgemäßen Reinigungsinstrumentes.

### Detaillierte Beschreibung des Ausführungsbeispiels

Ein in Fig.1 dargestelltes Reinigungsinstrument 10 weist einen Kopfabschnitt 12 und einen sich an diesen anschließenden Reinigungsabschnitt 14 auf. Das Reinigungsinstrument 10 dient zum Entfernen von Material aus einem Zahnwurzelkanal, das in diesem zurückgeblieben ist, nachdem der Zahnwurzelkanal mittels eines Bohr- oder Schabeinstrumentes ausgeräumt worden ist. Ferner können mit dem Reinigungsinstrument 10 auch Bereiche des Zahnwurzelkanals gereinigt werrden, die sich mit Bohrinstrumenten nicht reinigen lassen. Das Reinigungsinstrument 10 ist in der Fig.1 nicht maßstabsgetreu wiedergegeben, sondern zur besser Darstellbarkeit in stark verkürzter Form.

Der Kopfabschnitt 12 ist im wesentlichen mittels einer Hülse 16 gebildet, die sich in ein Bohrfutter einer nicht dargestellten Bohr- bzw. Reinigungseinrichtung einspannen lässt. Bei einem alternativen, nicht dargestellten Ausführungsbeispiel weist der Kopfabschnitt 12 einen Handgriff auf, mittels dem das Reinigungsinstrument 10 manuell in einen Zahnwurzelkanal eingeführt und in diesem bewegt, insbesondere gedreht werden kann.

In der Hülse 16 ist eine Seele 18 in Gestalt eines Metallstabes aus Titan angeordnet. Verbunden sind die Hülse 16 und die Seele 18 mittels einer Presspassung. Alternativ oder zusätzlich zu einer solchen kraftschlüssigen Verbindung kann eine formschlüssige Verbindung vorgesehen sein, beispielsweise indem der bezogen auf Fig.1 obere Endabschnitt der Seele 18 mit einem Mehrkantprofil versehen ist.

Die Seele 18 ist als zylinderförmiger Stab gestaltet, d.h. sie weist über ihre gesamte Länge im wesentlichen den gleichen Durchmesser auf. Im dargestellten Ausführungsbeispiel beträgt der Durchmesser 0,08 mm. Alternativ kann der Durchmesser vorteilhaft etwa 0,05 mm bis 0,8 mm betragen.

Die Seele 18 erstreckt sich in einen Schaft 20, der im wesentlichen Kegelform aufweist und die Seele 18 symmetrisch umgibt. Der Kegel weist am bezogen auf Fig.1 oberen Ende einen Durchmesser D von 0,4 mm und am entgegengesetzten Ende einen Durchmesser d von 0,1 mm auf. Der Schaft 20 ist mit einer Verjüngung von etwa 0,04 mm pro mm Länge in Längsrichtung versehen. Bei alternativen, nicht dargestellten Ausführungsbeispielen beträgt die Verjüngung von etwa 0,02 mm pro mm Länge in Längsrichtung bis zu 0,06 mm pro mm Länge in Längsrichtung.

Der Schaft 20 ist aus Kunststoff hergestellt, der mittels eines Mikrospritzgießverfahrens um die Seele 18 gegossen worden ist. Damit ist eine dauerhafte Verbindung zwischen der Seele 18 und dem Schaft 20 geschaffen. Im vorliegenden Ausführungsbeispiel wurde Polypropylen verwendet.

Bei einem nicht dargestellten Ausführungsbeispiel ist die Seele 18 leicht kegelförmig gestaltet, wobei der spitz zulaufende Endbereich des Kegels sich an dem Ende der Seele 18 befindet, das entgegengesetzt vom Kopfabschnitt 12 angeordnet ist. Eine derart kegelförmig gestaltete Seele 18 ist am spitz zulaufenden Endbereich leichter zu biegen als am Kopfabschnitt 12. Beim Einführen in und Reinigen des Zahnwurzelkanals passt sich der Schaft 20 daher leichter der Form des Zahnwurzelkanals in dessen hinterem Abschnitt an, in dem der Zahnwurzelkanal in der Regel gebogen ist.

An der Mantelfläche des kegelförmigen Schaftes 20 sind Borsten oder Noppen 22 ausgebildet, die längs einer in Fig.1 gestrichelt dargestellten Schraubenlinie angeordnet sind. Die Borsten 22 ragen im wesentlichen senkrecht von der Mantelfläche des kegelförmigen Schaftes 20 ab. Sie sind etwa 0,05 mm lang und weisen einen Durchmesser von 0,01 mm auf. Bei alternativen, nicht dargestellten Ausführungsbeispielen sind die Borsten 22 0,02 mm bis 0,2 mm lang.

Am bezogen auf Fig.1 unteren Ende des Schaftes 20, d.h. an dem Ende das entgegengesetzt vom Kopfabschnitt 12 angeordnet ist, sind am Schaft 20 Borsten 22a und 22b angeordnet, die auch in Richtung der Längsachse des Schaftes 20 weisen.

Das Reinigungsinstrument 10 wird in die genannte Bohreinrichtung eingespannt und unter Rotation in einen zuvor ausgeräumten Zahnwurzelkanal eingeführt. Dabei wirken die Borsten 22a und 22b mit den Borsten 22 zusammen und fördern gemeinsam mit diesen Material selbst aus dem apikalen Abschnitt des Zahnwurzelkanals nach außen.

Die Borsten 22, 22a und 22b sind zusammen mit dem Schaft 20 in einem einzelnen Mirkospritzgießverfahren hergestellt worden. Die Borsten 22, 22a und 22b sind daher dauerhaft mit dem Schaft 20 verbunden.

Zugleich sind die Borsten 22, 22a und 22b ausreichend weich gestaltet, dass sie sich gut der Wand des Wurzelkanals anpassen.

Bei einem nicht dargestellten Ausführungsbeispiel eines Reinigungsinstrumentes 10 ist der Schaft 20 des Reinigungsabschnitts 14 zylinderförmig gestaltet und die an ihm ausgebildeten Borsten 22 bilden eine Kegelform, die in etwa der in Fig.1 dargestellten Kegelform entspricht. Bei einem derartigen Reinigungsinstrument 10 sind die Borsten 22 insbesondere in dem Abschnitt besonders lang, der sich nahe dem Kopfabschnitt 12 befindet. Zugleich ist der Schaft 20 auch in diesem Abschnitt besonders schlank. Ein derart gestaltetes Reinigungsinstrument 10 kann daher auch in besonders enge Wurzelkanäle eingeführt werden. Die verhältnismäßig langen Borsten 22 passen sich auch an die Wand eines derart engen Wurzelkanals gut an.

Um die Reinigungswirkung des Reinigungsabschnitts 14 weiter zu erhöhen, sind die Borsten 22, 22a und 22b mit einem abrasiven Material beschichtet. Alternativ oder zusätzlich kann auf den Borsten 22, 22a und 22b ein Gleit- und/oder Desinfektionsmittel aufgebracht sein.

### Bezugszeichenliste

- 10: Reinigungsinstrument
- 12: Kopfabschnitt
- 14: Reinigungsabschnitt
- 16: Hülse
- 18: Seele
- 20: Schaft
- 22: Borsten
- 22a: Borste an der Spitze
- 22b: Borste an der Spitze
- D: Durchmesser am Kopfabschnitt
- d: Durchmesser an der Spitze

## Patentansprüche

1. Reinigungsinstrument (10) für einen Zahnwurzelkanal oder Zahnzwischenraum mit einem Kopfabschnitt (12) und einem sich daran anschließenden Reinigungsabschnitt (14), der einen Schaft (20) aufweist, der an seiner Mantelfläche mit Borsten (22) versehen ist,
**dadurch gekennzeichnet, dass** der Schaft (20) zusammen mit den Borsten (22) einstückig ausgebildet ist, und dass der Schaft (20) eine Seele (18) aus einem versteifenden Material aufweist..

2. Reinigungsinstrument nach Anspruch 1,
**dadurch gekennzeichnet, dass** der Schaft (20) zusammen mit den Borsten (22) durch ein Fräsverfahren, insbesondere ein Mikrofräsverfahren, hergestellt ist.

3. Reinigungsinstrument nach Anspruch 1 oder 2
**dadurch gekennzeichnet, dass** der Schaft (20) zusammen mit den Borsten (22) durch ein Gießverfahren, insbesondere ein Mikrospritzgießverfahren, hergestellt ist.

4. Reinigungsinstrument nach einem der vorhergehenden Ansprüche,
**dadurch gekennzeichnet dass**, die Seele (20) aus Metall aufgebaut ist.

5. Reinigungsinstrument nach einem der vorhergehenden Ansprüche,
**dadurch gekennzeichnet, dass** die Borsten (22) insgesamt eine im wesentlichen kegelförmige Außenform des Reinigungsabschnitts (14) bilden.

6. Reinigungsinstrument nach einem der vorhergehenden Ansprüche,
**dadurch gekennzeichnet, dass** die Borsten (22) über die Mantelfläche des Schaftes (20) schraubenförmig verteilt angeordnet sind.

7. Reinigungsinstrument nach einem der vorhergehenden Ansprüche,
**dadurch gekennzeichnet, dass** die Borsten (22) beschichtet sind, insbesondere mit einem abrasiven Material oder einem chemisch wirkenden Mittel, etwa einem Reinigungsmittel, Desinfektionsmittel und/oder Gleitmittel.

8. Reinigungsinstrument nach einem der vorhergehenden Ansprüche,
**dadurch gekennzeichnet, dass** die Borsten (22) zumindest teilweise zur Längsachse des Schaftes geneigt angeordnet sind, insbesondere, dass Borsten (22a, 22b) an der Spitze des Schaftes (20) im wesentlichen in Richtung der Längsachse des Schaftes (20) von diesem abstehen.

9. Verfahren zum Herstellen eines Reinigungsinstrumentes für einen Zahnwurzelkanal, das ein Kopfabschnitt (12) und einen daran anschließenden Reinigungsabschnitt (14) mit einem Schaft (20) aufweist, dessen Mantelfläche mit Borsten (22) versehen ist,
**gekennzeichnet durch** den Schritt: Herstellen des Schaftes (20) zusammen mit den Borsten (22) aus einem Stück.

10. Verfahren nach Anspruch 9,
**dadurch gekennzeichnet, dass** das Herstellen ein Fräsen des Schaftes (20) zusammen mit den Borsten (22), insbesondere ein Mikrofräsen, umfasst.

11. Verfahren nach Anspruch 9,
**dadurch gekennzeichnet, dass** das Herstellen ein Gießen des Schaftes (20) zusammen mit den Borsten (22), insbesondere ein Mikrospritzgießen, umfasst.
